(19) Europäisches Patentamt
European Patent Office
Office européen des brevets

(11) **EP 2 516 155 B1**

(12) **EUROPEAN PATENT SPECIFICATION**

(45) Date of publication and mention
of the grant of the patent:
**14.11.2018 Bulletin 2018/46**

(21) Application number: **10839707.6**

(22) Date of filing: **14.12.2010**

(51) Int Cl.:
*G02B 5/28* (2006.01)        *B32B 7/02* (2006.01)
*B32B 27/08* (2006.01)       *B32B 27/34* (2006.01)
*B32B 27/36* (2006.01)       *B32B 27/30* (2006.01)

(86) International application number:
**PCT/KR2010/008929**

(87) International publication number:
**WO 2011/078510 (30.06.2011 Gazette 2011/26)**

(54) **DOUBLE WAVELENGTH-REFLECTIVE MULTI-LAYER FILM**

MEHRSCHICHTIGE DOPPELWELLENLÄNGEN-REFLEXIONSFOLIE

FILM MULTICOUCHE RÉFLÉCHISSANT DEUX LONGUEURS D'ONDE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **22.12.2009 KR 20090129070**

(43) Date of publication of application:
**31.10.2012 Bulletin 2012/44**

(73) Proprietor: **SKC Co., Ltd
Suwon-si, Gyeonggi-do 440-300 (KR)**

(72) Inventors:
 • **WOO, Se Yoon
  Seoul 158-812 (KR)**
 • **LEE, Gwan-Hyung
  Hwaseong-si
  Gyeonggi-do 445-893 (KR)**
 • **JOO, Cheon Yong
  Seoul 151-015 (KR)**
 • **PAK, Hyung Suk
  Hwaseong-si
  Gyeonggi-do 445-810 (KR)**
 • **SON, Byoung Kuk
  Seoul 139-240 (KR)**
 • **SHIN, Dae Yong
  Incheon 407-060 (KR)**

(74) Representative: **Dehns
St. Brides House
10 Salisbury Square
London EC4Y 8JD (GB)**

(56) References cited:
**WO-A1-99/36258        WO-A2-2008/058115
US-A- 5 103 337        US-A- 5 122 905
US-A- 5 540 978        US-A1- 2004 004 760
US-A1- 2005 079 333    US-A1- 2006 232 863
US-A1- 2008 090 073**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**FIELD OF THE INVENTION**

The present invention is directed to a multi-layer film which is capable of reflecting two visible light wavelength regions in the form of one stack.

**BACKGROUND OF THE INVENTION**

Reflective films having a multi-layer structure can reflect a particular wavelength of light, the whole visible light region, or infrared rays, or generate a polarized light, and they have been extensively used in packaging, industry, and display applications.

Such reflective multi-layer films exploit the reflection and interference characteristics of light of each of the constituent layers. Based on this principle, in order to reflect a particular light of wavelength ($\lambda$), several resin layers having refractive indexes different from each other are generally stacked to a total thickness of $\lambda/4$.

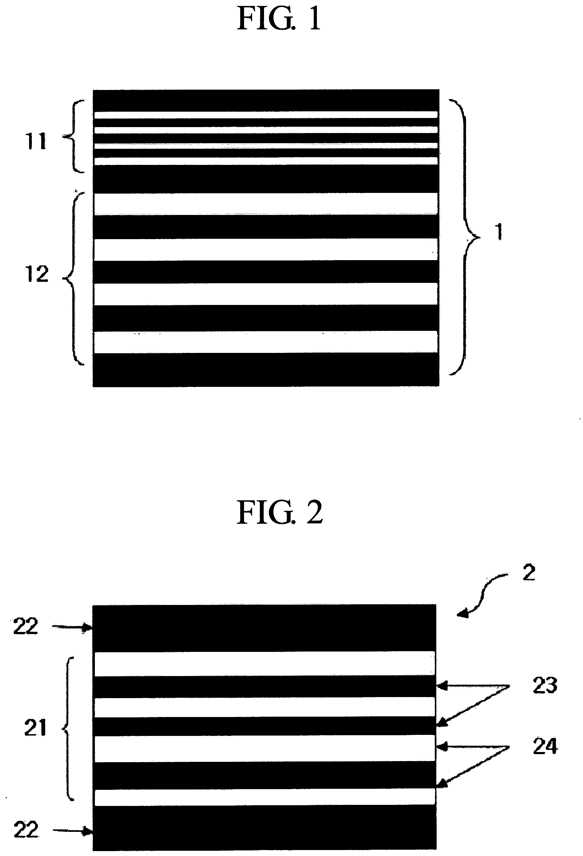

In addition, for reflecting at least two light wavelengths, there has been employed a method of combining at least two stacks satisfying respective reflectance characteristics. For example, referring to FIG. 1, a conventional double wavelength-reflective multi-layer film (1) is obtained by manufacturing a first $\lambda_1/4$-thick stack ("stack 1", 11) for reflecting a first light of wavelength ($\lambda_1$) and a second $X_2/4$-thick stack ("stack 2", 12) for reflecting a second light of wavelength ($\lambda_2$), respectively, and combining the two stacks.

However, the conventional method to combine several stacks according to the number of the wavelength has the problem that it requires complicated equipments and processes.

US2005/0079333 discloses a multilayer polymeric film useful in making coloured mirrors which change colour as a function of viewing angle, the film comprising a stack of layers having a thickness gradient.

SUMMARY OF THE INVENTION

Accordingly, it is an object of the present invention to provide a multi-layer film which is capable of reflecting two visible light wavelength regions in the form of one stack.

In accordance with the present invention, there is provided a double wavelength-reflective multi-layer film comprising a reflective layer part composed of a plurality of resin layers A and a plurality of resin layers B which are alternatively stacked, the resin layers A and B having refractive indexes different from each other and having thicknesses whose standard deviation ranges from 10 to 20 nm, respectively, wherein; the multi-layer film has an f-ratio of 0.33 to 0.66, the f-ratio calculated by formula (I):

$$d_1 / (d_1 + d_2) \qquad (I)$$

wherein, $d_1$ and $d_2$ are the optical thicknesses of the resin layers A and B, respectively; the multi-layer film has a maximum reflectance of 50% or higher at the 600 to 700 nm wavelength region and a maximum reflectance of 30% or higher at the 400 to 470 nm wavelength region; the multilayer film which has an "a*" value of at least 10 and a "b*" value of at most -6 in a CIE colorimetric system on a reflectance spectrum when observed at an angle within 15° based on the front; the thickness of each of the resin layers A and B is in the range of 50 to 250 nm; the reflective layer part is composed of 100 to 250 layers and the difference in the refractive index between the resin layers A and B is 0.13 or more; and the multi-layer film is obtained by biaxially drawing a precursory undrawn sheet in the longitudinal direction at a draw ratio of 3.0 to 3.7, and in the transverse direction at a draw ratio of 3.0 to 4.5.

BRIEF DESCRIPTION OF THE DRAWING

The above and other objects and features of the present invention will become apparent from the following description of the invention, when taken in conjunction with the accompanying drawings, which respectively show:

FIG. 1 : a cross-sectional view of a double wavelength-reflective multi-layer film in accordance with one embodiment of the conventional technique;
FIG. 2: a cross-sectional view of a double wavelength-reflective multi-layer film in accordance with one embodiment of the present invention;
FIGs. 3 to 6: reflectance spectra of the multi-layer films prepared in Examples 1 to 4, respectively; and
FIGs. 7 to 10: reflectance spectra of the multi-layer films prepared in Comparative Examples 1 to 4, respectively.

## DETAILED DESCRIPTION OF THE INVENTION

The term "thickness" used herein refers to a real and physical thickness of a resin layer; and the term "optical thickness," a thickness detected by light passing through a resin layer, wherein the optical thickness is approximately identical to the value obtained by multiplying the thickness of the resin layer by the refractive index thereof.

The present invention is based on the principle of an amplitude splitting interference system. The condition (optical thicknesses $d_1$ and $d_2$) to make maximum the interference of light generated by the difference in the refractive index between the resin layers A and B may be represented by formula (II):

$$d_1 = (2m + 1) \times \lambda_f/4, d_2 = (2m' + 1) \times \lambda_f'/4 \qquad (II)$$

wherein,

$d_1$ and $d_2$ are the optical thicknesses (nm) of the resin layers A and B, respectively;
m and m' are each independently an integer of 0 or more; and
$\lambda_f$ and $\lambda_f'$ are each independently a light wavelength to be reflected.

As can be understood in formula (II), although the thickness of the resin layer is constant, reflectance peaks continuously occur according to increasing of the m or m' value. Wherein, in conventional, two reflectance peaks, a first peak (the highest peak) and a second peak (the highest peak besides the first peak), both are not simultaneously located within a visible light region due to a broad gap therebetween. Therefore, the present invention makes both of the first and second peaks close to a visible light region, thereby rendering the two peaks or the partial spectra thereof to be located within the visible-ray region when the film is observed in the front.

Consequently, the inventive multi-layer film can selectively reflect a visible light wavelength ranging from 400 to 700 nm. For example, it may simultaneously reflect a red color (a 600 to 700 nm wavelength region) and a blue color (a 400 to 470 nm wavelength region), reflecting a mixed color of the two lights, i.e., a pink color, when observed at an angle within about 15° based on the front. Further, as the observation angle is beyond 15° based on the front, the peak in the blue color wavelength region (400 to 470 nm) gradually disappears, and the peak in the red color wavelength region (600 to 700 nm) gradually migrates to a lower wavelength region (500 to 600 nm), which causes reflection of a color between yellow and green.

Preferably, the 600 to 700 nm wavelength region comprises the first peak or a partial spectrum thereof, and the 400 to 470 nm wavelength region comprises the second peak or a partial spectrum thereof.

A multi-layer film in accordance with one embodiment of the present invention is shown in FIG. 2. The inventive double wavelength-reflective multi-layer film (2) comprises a reflective layer part (21) composed of at least one resin layer A (23) and at least one resin layer B (24) which are alternatively stacked, and it may further comprise a protection layer (22) on one or both surfaces of the reflective layer part (21).

The inventive multi-layer film is characterized in that thickness of each of the resin layers A and B varies within an appropriate distribution, not maintains constant. When the thickness of the individual resin layers is constant, it is impossible to narrow the distance between the first peak and the second peak. Thus, in the present invention, the resin layers A and B should have thicknesses whose standard deviation ranges from 10 to 20 nm, more preferably about 15 nm. When the standard deviation is less than 6 nm, an edge tail of the reflectance spectrum is too short, i.e., a decline between the peak and the edge thereof is too steep, which cannot guide the first peak or a part thereof and the second peak or a part thereof within the visible light region. When the standard deviation is more than 30 nm, an edge tail of the reflectance spectrum is too long, i.e., a decline between the peak and the edge thereof is too gentle, which cannot provide a bright color.

The inventive multi-layer film is characterized by having an f-ratio of 0.33 to 0.66 wherein the f-ratio is calculated by formula (I).

The resin layers A to B thickness ratio may be 1 : 0.5~2.

The thickness of each of the resin layers A and B may be in the range of 50 to 250 nm. Within the aforementioned thickness scope, the first peak may be located around the 700 nm wavelength.

A total thickness of the inventive multi-layer film may be in the range of 10 to 100 $\mu$m, preferably 10 to 30 $\mu$m. It is preferred that the total thickness of the film maintains constant regardless of a width and a length thereof. For example, the standard deviation of the total thickness is preferably below 1.5 $\mu$m, more preferably below 0.7 $\mu$m when the film has a width or a length of 5 m or lower.

The inventive multi-layer film may further comprise a protection layer laminated on one or both surfaces of the reflective layer part. The protection layer may be the resin layer A or B. Preferably, in case that the exposed surface of the reflective layer part is the resin layer A, the resin layer B may be laminated thereon as a protection layer; and in case that it is the resin layer B, the resin layer A may be laminated thereon as a protection layer.

It is proper that the thickness of the protection layer is in the range of about 10 to 30% of the total thickness of the film. In the present invention, the thickness of the protection layer may be in the range of 0.1 to 15 $\mu$m, preferably 1 to 5 $\mu$m. Use of the protection layer having such a thickness brings out improved layer uniformity of the reflective layer part. When the protection layer becomes excessively thick as compared to the reflective layer part, layer uniformity of the reflective layer part becomes poor due to viscoelastic distortion of the protection layer.

A difference in the refractive index between the resin layers A and B may be at least 0.13. Such a refractive index difference may be originated from the refractive index of the used resin itself, or from that amplified by an orientation process. The reflective layer part is composed of 100 to 250 layers.

The resin layers A and B may be each made of a polymeric resin selected from the group consisting of poly(ethylene terephthalate) (PET), poly(butylene terephthalate) (PBT), poly(methyl methacrylate) (PMMA), polylactic acid (PLA), poly(ethylene naphthalate) (PEN), and a blend thereof, but not limited thereto.

The inventive double wavelength-reflective multi-layer film can reflect two visible light wavelength regions in the form of one stack. For example, it can reflect a mixed color of red and blue, i.e., a pink color, when observed near the front. Meanwhile, as the observation angle is larger, the blue color gradually disappears and the red color gradually changes into a color between yellow and green. Accordingly, the inventive film can be advantageously used in packaging, industry, and display applications.

The present invention is further described and illustrated in Examples, which are, however, not intended to limit the scope of the present invention.

Example 1

Poly(ethylene terephthalate) (PET) and poly(methyl methacrylate) (PMMA) were used as component resins of resin layers A and B, respectively. The PET and PMMA were each melt-extruded through an extruder. A 145-layer laminate having resin layer A as the outermost layer was prepared by introducing the extruded resins into a multi-layer feed block equipped with multiple feeding pipes to generate 73 layers of resin layer A and 72 layers of resin layer B, respectively, and alternatively stacking them. In this operation, the resin layers were each allowed to pass through a divided zone having a different volume in the predesigned feeding pipe. The resulting resin layers A and B have average thicknesses of 136 nm (standard deviation: 15 nm) and 91 nm (standard deviation: 15 nm), respectively.

The laminate thus obtained was biaxially drawn to obtain a multi-layer film having an average f-ratio of 0.619. The f-ratio was calculated using formula (I) based on the optical thicknesses of the resin layers A and B, the optical thickness being obtained by multiplying the layer thickness by the refractive index.

Example 2

The procedure of Example 1 was repeated except for alternatively stacking the resin layers A and B to prepare a 99-layer laminate, to obtain a multi-layer film having an average f-ratio of 0.602. The resulting resin layers A and B have average thicknesses of 148 nm (standard deviation: 14 nm) and 92 nm (standard deviation: 14 nm), respectively.

Example 3

The procedure of Example 1 was repeated except for alternatively stacking the resin layers A and B to prepare a 289-layer laminate, to obtain a multi-layer film having an average f-ratio of 0.641. The resulting resin layers A and B have average thicknesses of 144 nm (standard deviation: 15 nm) and 89 nm (standard deviation: 18 nm), respectively.

Example 4

The procedure of Example 1 was repeated except for alternatively stacking the resin layers A and B to prepare a 145-layer laminate, to obtain a multi-layer film having an average f-ratio of 0.680. The resulting resin layers A and B have average thicknesses of 136 nm (standard deviation: 20 nm) and 71 nm (standard deviation: 18 nm), respectively.

Comparative Examples 1 to 4

The procedures of Examples 1 to 4 were repeated except for adjusting thickness standard deviations of the resin layers A and B to 5 nm, respectively, to obtain respective multi-layer films.

The compositions of the multi-layer films obtained in Examples 1 to 4 and Comparative Examples 1 to 4 are shown in Table 1. The refractive index was measured using an Abbe refractometer on the individual resin layers formed by a melt-extrusion with a single extruder and a drawing.

<Table 1>

| | Resin layer | | Layer number | f-ratio | Average thickness (nm) | | Standard deviation (nm) | | Refractive index | |
|---|---|---|---|---|---|---|---|---|---|---|
| | A | B | | | A | B | A | B | A | B |
| Ex.1 | PET | PMMA | 145 | 0.619 | 136 | 91 | 15 | 15 | 1.65 | 1.49 |
| Ex.2 | PET | PMMA | 99 | 0.602 | 148 | 92 | 14 | 14 | 1.65 | 1.49 |
| Ex.3 | PET | PMMA | 289 | 0.641 | 144 | 89 | 15 | 18 | 1.65 | 1.49 |
| Ex.4 | PEN | PET | 145 | 0.680 | 136 | 71 | 20 | 18 | 1.84 | 1.65 |
| CE.1 | PET | PMMA | 145 | 0.619 | 136 | 91 | 5 | 5 | 1.65 | 1.49 |
| CE.2 | PET | PMMA | 99 | 0.602 | 148 | 92 | 5 | 5 | 1.65 | 1.49 |
| CE.3 | PET | PMMA | 289 | 0.641 | 144 | 89 | 5 | 5 | 1.65 | 1.49 |
| CE.4 | PEN | PET | 145 | 0.680 | 126 | 71 | 5 | 5 | 1.84 | 1.65 |

Test Example

Each of the multi-layer films obtained in Examples 1 to 4 and Comparative Examples 1 to 4 was cut into a 30 mm (length) x 30 mm (width) piece, and subjected to cleaning to remove contaminants on both surface thereof. The film sample thus obtained was applied to a spectrophotometer (Hunter Associates Laboratory, UltraScan PRO) to measure its "L*", "a*" and "b*" values in a CIE colorimetric system (a light source: C, an observation angle: 10°, a measurement area: $19mm^2$, and a specular included mode).

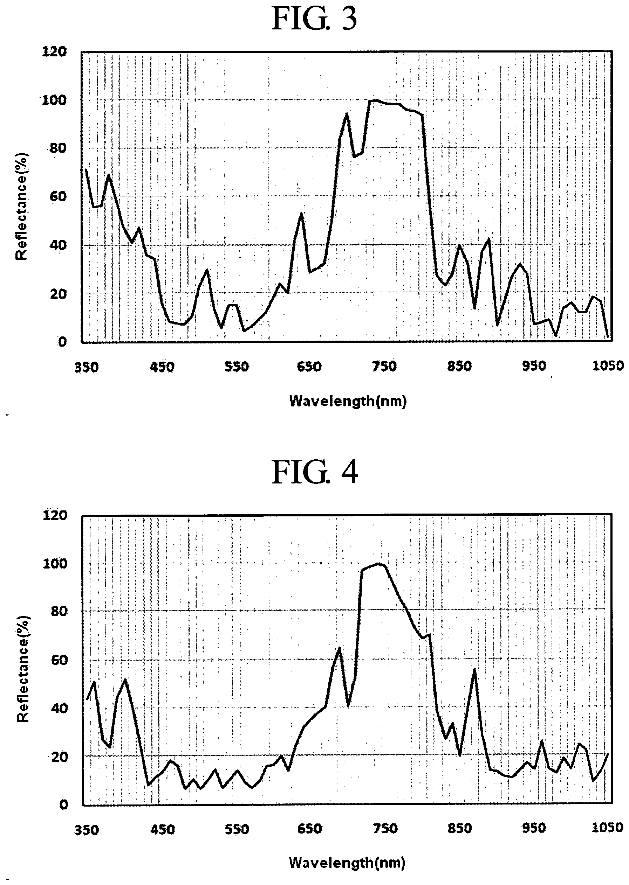

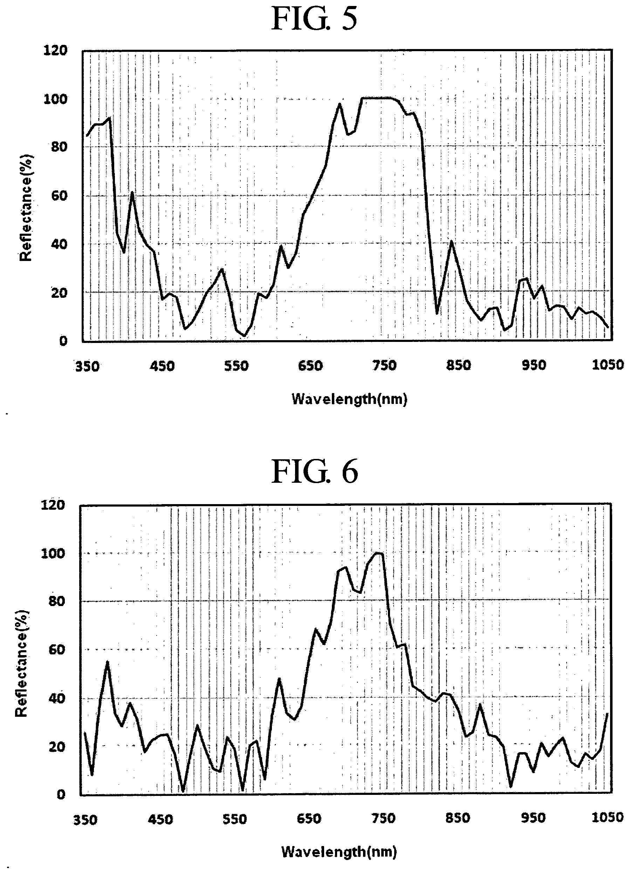

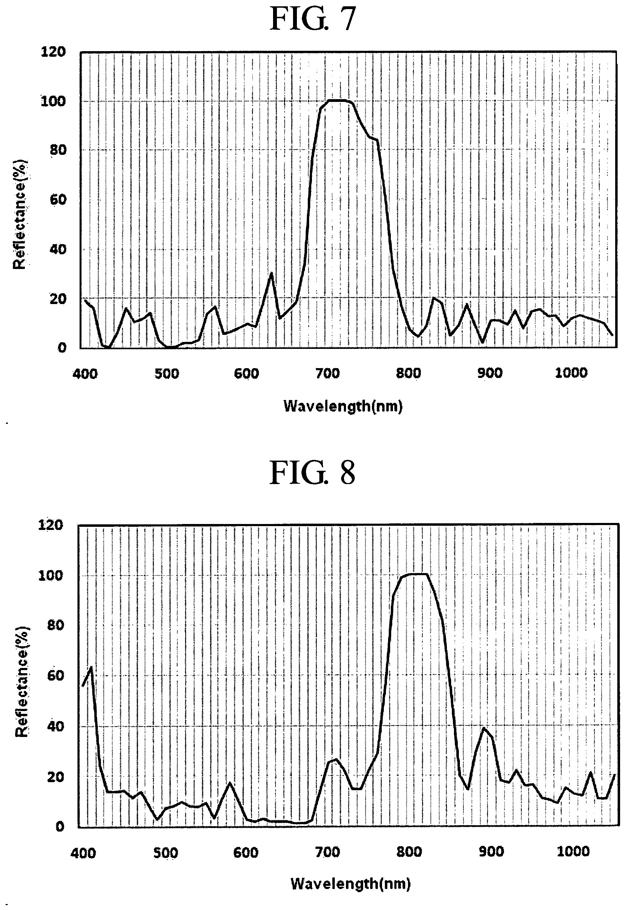

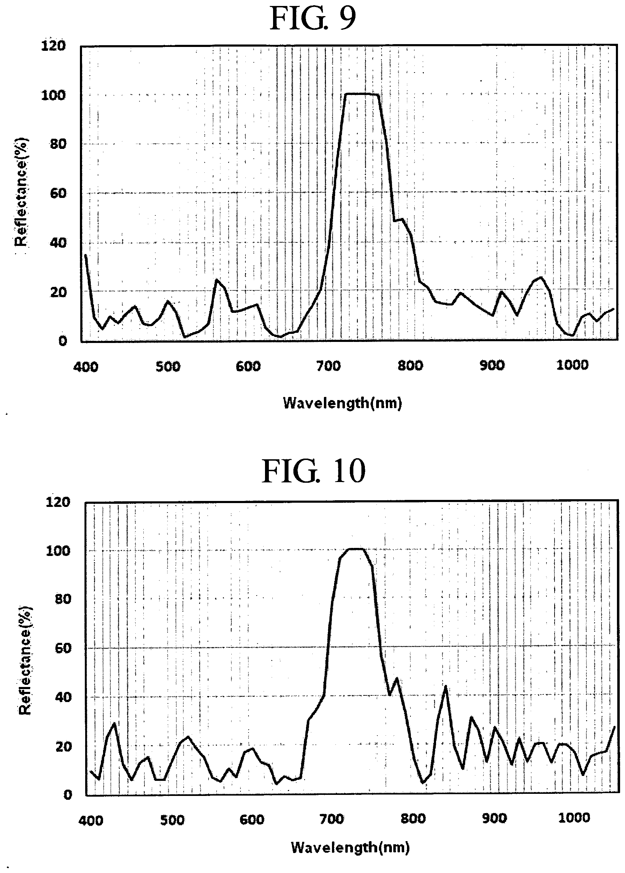

The tone values by reflectance thus obtained and colors observed in the front with a naked eye are shown in Table 2, and respective reflectance spectra are depicted in FIGs. 3 to 10.

<Table 2>

| | Tone value by reflectance | | | Color with a naked eye |
|---|---|---|---|---|
| | L* | a* | b* | |
| Ex. 1 | 45 | 24 | -20 | Pink |
| Ex. 2 | 41 | 19 | -8 | Pink |
| Ex. 3 | 42 | 29 | -19 | Pink |
| Ex. 4 | 50 | 23 | -6 | Pink |
| C.E. 1 | 30 | 30 | -1 | Red |
| C.E. 2 | 34 | 8 | -22 | Blue |
| C.E. 3 | 39 | 4 | 3 | White |
| C.E. 4 | 42 | -2 | -4 | White |

As can be seen in Table 2, the inventive multi-layer films obtained in Examples simultaneously reflect a red color (the 600 to 700 nm wavelength region) and a blue color (the 400 to 470 nm wavelength region), reflecting a mixed color of the two lights, i.e., a pink color, when observed near the front, unlike those obtained in Comparative Examples, which suggests that the inventive film has excellent visual effects.

While the invention has been described with respect to the above specific embodiments, it should be recognized that various modifications and changes may be made to the invention by those skilled in the art which also fall within the scope of the invention as defined by the appended claims.

## Claims

1. A double wavelength-reflective multi-layer film (2) comprising a reflective layer part (21) composed of a plurality of resin layers A (23) and a plurality of resin layers B (24) which are alternatively stacked, the resin layers A and B having refractive indexes different from each other and having thicknesses whose standard deviation ranges from 10 to 20 nm, respectively, wherein:

   the multi-layer film has an f-ratio of 0.33 to 0.66, the f-ratio calculated by formula (I):

   $$d_1 / (d_1 + d_2) \qquad (I)$$

   wherein, $d_1$ and $d_2$ are the optical thicknesses of the resin layers A and B, respectively;
   the multi-layer film has a maximum reflectance of 50% or higher at the 600 to 700 nm wavelength region and a maximum reflectance of 30% or higher at the 400 to 470 nm wavelength region;
   the multilayer film which has an "a*" value of at least 10 and a "b*" value of at most -6 in a CIE colorimetric system on a reflectance spectrum when observed at an angle within 15° based on the front;
   the thickness of each of the resin layers A and B is in the range of 50 to 250 nm;
   wherein the reflective layer part is composed of 100 to 250 layers and the difference in the refractive index between the resin layers A and B is 0.13 or more; and
   the multi-layer film is obtained by biaxially drawing a precursory undrawn sheet in the longitudinal direction at a draw ratio of 3.0 to 3.7, and in the transverse direction at a draw ratio of 3.0 to 4.5.

2. The double wavelength-reflective multi-layer film of claim 1, wherein the resin layers A to B thickness ratio is 1 : 0.5~2.

3. The double wavelength-reflective multi-layer film of claim 1, which has a total thickness ranging from 10 to 100 $\mu$m.

4. The double wavelength-reflective multi-layer film of claim 1, wherein the standard deviation of the total thickness is below 1.5 $\mu$m when its width or length is lower than 5 m.

5. The double wavelength-reflective multi-layer film of claim 1, which further comprises a protection layer (22) laminated on one or both surfaces of the reflective layer part, the thickness of the protection layer being in the range of 0.1 to 15 $\mu$m.

6. The double wavelength-reflective multi-layer film of claim 5, wherein the protection layer is the resin layer A or B.

7. The double wavelength-reflective multi-layer film of claim 1, wherein the resin layers A and B are each made of a polymeric resin selected from the group consisting of poly(ethylene terephthalate) (PET), poly(butylene terephthalate) (PBT), poly(methyl methacrylate) (PMMA), polylactic acid (PLA), poly(ethylene naphthalate) (PEN), and a blend thereof.

## Patentansprüche

1. Mehrschichtige Doppelwellenlängen-Reflexionsfolie (2), umfassend einen Reflexionsschichtteil (21), der aus einer Vielzahl von Harzschichten A (23) und einer Vielzahl von Harzschichten B (24) besteht, die abwechselnd gestapelt sind, wobei die Harzschichten A und B Brechungsindexe aufweisen, die sich voneinander unterscheiden, und Dicken aufweisen, deren Standardabweichung jeweils von 10 bis 20 nm reicht, wobei:

   die mehrschichtige Folie ein f-Verhältnis von 0,33 bis 0,66 aufweist, wobei das f-Verhältnis durch Formel (I) berechnet wird:

   $$d_1 / (d_1 + d_2) \qquad (I)$$

   wobei $d_1$ und $d_2$ jeweils die optischen Dicken der Harzschichten A und B sind;
   die mehrschichtige Folie einen maximalen Reflexionsgrad von 50 % oder höher im 600 bis 700 nm Wellenlängenbereich und einen maximalen Reflexionsgrad von 30% oder höher im 400 bis 470 nm Wellenlängenbereich aufweist;

die mehrschichtige Folie einen "a*" Wert von mindestens 10 und einen "b*" Wert von höchstens -6 in einem CIE kolorimetrischen System auf einem Reflexionsspektrum aufweist, wenn bei einem Winkel innerhalb von 15° basierend auf der Vorderseite beobachtet;

die Dicke jeder der Harzschichten A und B im Bereich von 50 bis 250 nm liegt; wobei der Reflexionsschichtteil sich aus 100 bis 250 Schichten zusammensetzt und die Differenz im Brechungsindex zwischen den Harzschichten A und B 0,13 oder mehr beträgt; und

die mehrschichtige Folie durch biaxiales Ziehen eines vorläufigen ungezogenen Blatts in die Längsrichtung bei einem Ziehverhältnis von 3,0 bis 3,7 erhalten wird, und in die Querrichtung bei einem Ziehverhältnis von 3,0 bis 4,5.

2. Mehrschichtige Doppelwellenlängen-Reflexionsfolie nach Anspruch 1, wobei das Dickenverhältnis der Harzschichten A zu B 1 : 0,5~2 beträgt.

3. Mehrschichtige Doppelwellenlängen-Reflexionsfolie nach Anspruch 1, die eine Gesamtdicke aufweist, die von 10 bis 100 μm reicht.

4. Mehrschichtige Doppelwellenlängen-Reflexionsfolie nach Anspruch 1, wobei die Standardabweichung der Gesamtdicke unter 1,5 μm liegt, wenn ihre Breite oder Länge niedriger als 5 m ist.

5. Mehrschichtige Doppelwellenlängen-Reflexionsfolie nach Anspruch 1, die weiter eine Schutzschicht (22) umfasst, die auf einer oder beiden Oberflächen des Reflexionsschichtteils laminiert ist, wobei die Dicke der Schutzschicht im Bereich von 0,1 bis 15 μm liegt.

6. Mehrschichtige Doppelwellenlängen-Reflexionsfolie nach Anspruch 5, wobei die Schutzschicht die Harzschicht A oder B ist.

7. Mehrschichtige Doppelwellenlängen-Reflexionsfolie nach Anspruch 1, wobei die Harzschichten A und B jeweils aus einem polymeren Harz hergestellt sind, das ausgewählt ist aus der Gruppe bestehend aus Poly(ethylenterephthalat) (PET), Poly(butylenterephthalat) (PBT), Poly(methylmethacrylat) (PMMA), Polymilchsäure (PLA), Poly(ethylennaphthalat) (PEN) und einer Mischung davon.

**Revendications**

1. Film multicouche réfléchissant deux longueurs d'onde (2) comprenant une partie de couche réfléchissante (21) composée d'une pluralité de couches de résine A (23) et d'une pluralité de couches de résine B (24) qui sont empilées en alternance, les couches de résine A et B ayant des indices de réfraction différents l'un de l'autre et ayant des épaisseurs dont l'écart standard est compris dans la plage de 10 à 20 nm, respectivement, dans lequel :

le film multicouche a un rapport f de 0,33 à 0,66, le rapport f étant calculé par la formule (I) :

$$d_1/(d_1+d_2) \qquad (I)$$

dans laquelle $d_1$ et $d_2$ sont les épaisseurs optiques des couches de résine A et B, respectivement ;

le film multicouche a un facteur de réflexion maximum de 50 % ou plus au niveau de la région de longueur d'onde de 600 à 700 nm et un facteur de réflexion maximum de 30 % ou plus au niveau de la région de longueur d'onde de 400 à 470 nm ;

le film multicouche a une valeur « a* » d'au moins 10 et une valeur « b* » d'au maximum -6 dans un système colorimétrique CIE sur un spectre de facteur de réflexion quand on l'observe selon un angle dans les 15° sur la base de l'avant ;

l'épaisseur de chacune des couches de résine A et B est comprise dans la plage de 50 à 250 nm ;

dans lequel la partie de couche réfléchissante se compose de 100 à 250 couches et la différence d'indice de réflexion entre les couches de résine A et B est de 0,13 ou plus ; et

le film multicouche est obtenu en étirant de manière biaxiale une feuille non étirée précurseur dans la direction longitudinale selon un rapport d'étirement de 3,0 à 3,7, et dans la direction transversale selon un rapport d'étirement de 3,0 à 4,5.

**2.** Film multicouche réfléchissant deux longueurs d'onde selon la revendication 1, dans lequel le rapport d'épaisseur des couches de résine A sur B est de 1:0,5~2.

**3.** Film multicouche réfléchissant deux longueurs d'onde selon la revendication 1, qui a une épaisseur totale comprise dans la plage de 10 à 100 $\mu$m.

**4.** Film multicouche réfléchissant deux longueurs d'onde selon la revendication 1, dans lequel l'écart standard de l'épaisseur totale est inférieur à 1,5 $\mu$m quand sa largeur ou longueur est inférieure à 5 m.

**5.** Film multicouche réfléchissant deux longueurs d'onde selon la revendication 1, qui comprend en outre une couche de protection (22) stratifiée sur une ou les deux surfaces de la partie de couche réfléchissante, l'épaisseur de la couche de protection étant comprise dans la plage de 0,1 à 15 $\mu$m.

**6.** Film multicouche réfléchissant deux longueurs d'onde selon la revendication 5, dans lequel la couche de protection est la couche de résine A ou B.

**7.** Film multicouche réfléchissant deux longueurs d'onde selon la revendication 1, dans lequel les couches de résine A et B sont chacune composées d'une résine polymère sélectionnée à partir du groupe constitué par le poly(éthylène téréphtalate) (PET), le poly(butylène téréphtalate) (PBT), le poly(méthyl méthacrylate) (PMMA), l'acide polylactique (PLA), le poly(éthylène naphtalate) (PEN), et un mélange de ceux-ci.

FIG. 1

FIG. 2

## FIG. 3

## FIG. 4

# FIG. 5

# FIG. 6

## FIG. 7

## FIG. 8

# FIG. 9

# FIG. 10

## EP 2 516 155 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20050079333 A